# EUROPEAN PATENT SPECIFICATION

(11) **EP 1 861 849 B1**
(45) Date of publication and mention of the grant of the patent: **29.07.2009**
(21) Application number: 06842405.0
(22) Date of filing: 07.03.2006
(51) Int. Cl.: G11B 7/0065

(54) **METHOD FOR RECORDING DATA IN HOLOGRAPHIC DATA STORAGE SYSTEMS**
VERFAHREN ZUR AUFZEICHNUNG VON DATEN IN HOLOGRAPHISCHEN DATENSPEICHERUNGSSYSTEMEN
PROCEDE D'ENREGISTREMENT DE DONNEES DANS DES SYSTEMES DE STOCKAGE DE DONNEES HOLOGRAPHIQUES

(30) Priority: 17.03.2005 EP 05300191
(43) Date of publication of application: 05.12.2007
(73) Proprietor: Koninklijke Philips Electronics N.V., 5621 BA Eindhoven (NL)
(72) Inventor: BALISTRERI, Marcello, F-75008 Paris (FR); VAN HERPEN, Maarten, F-75008 Paris (FR)
(74) Representative: Uittenbogaard, Frank
(86) International application number: PCT/IB2006/050708
(87) International publication number: WO 2007/046007

(56) References cited:
- EP-A1- 1 065 658
- WO-A-20/05109410
- US-A1- 2002 135 832
- COUFAL H J ET AL: "Holographic Data Storage" HOLOGRAPHIC DATA STORAGE, SPRINGER SERIES IN OPTICAL SCIENCES VOLUME 76, BERLIN : SPRINGER VERLAG, DE, 2000, pages 55-57, XP002218093 ISBN: 3-540-66691-5 cited in the application

## Description

### FIELD OF THE INVENTION

The present invention relates to a method for recording data in a holographic recording medium in a holographic data storage system.

The invention is particularly relevant to increase data storage capacity in holographic data storage systems, namely reflective holographic data storage systems using a reflective spatial light modulator.

### BACKGROUND OF THE INVENTION

The holographic data storage technology is known to have the potential to obtain large storage densities, fast parallel access, rapid searches in large data bases and data encryption. Furthermore, this technology is suitable for compact and portable data storage.

However, it is a constant concern to increase the data capacity of the holographic storage medium used in the holographic data storage systems.

For that purpose, one solution consists in carrying out multiplexing in order to get as many holographic patterns as multiplexing channels.

Multiplexing can be achieved by using various methods.

One method is called "angle multiplexing". According to this method, the angle of the reference beam with respect to the recording medium is varied so that a plurality of holograms is recorded at a same location of the recording medium, each corresponding to a given angle of the reference beam.

In "wavelength multiplexing", the wavelength of the radiation beam is tuned in order to record different holograms at the same location of the holographic medium.

"Shift multiplexing" consists in recording a set of holograms by shifting the recording medium with respect to the optical unit. Once a hologram has been recorded at a given location of the recording medium, the recording medium is shifted over a distance that is less that the width of the hologram. Shift multiplexing is only possible when spherical waves interfere.

Naturally, combinations of different multiplexing methods may be possible.

However, although multiplexing leads to good results, it is still desirable to obtain an even higher storage capacity of the holographic recording medium.

### SUMMARY OF THE INVENTION

It is an object of the invention to provide a method for recording data in a holographic recording medium in a holographic data storage system which would contribute to a further increase of the data storage capacity of said holographic recording medium while being compatible with certain multiplexing methods.

To this end, the invention proposes a method for recording data in a holographic recording medium in a holographic data storage system, comprising the steps of:
- recording a first hologram through a first side of said holographic recording medium,
- rotating said holographic recording medium,
- recording a second hologram through a second side of same holographic recording medium.

It can be readily understood that the method according to the invention leads to an increase by a factor of two of the storage capacity of the recording medium.

In a particular embodiment, said holograms are wavelength multiplexed holograms.

This is allowed in case the maximum number of wavelength multiplexed holograms is limited by the wavelength range of the tunable laser systems and not by material properties, e.g. the dynamic range of the material.

In a preferred embodiment, said first wavelength multiplexed holograms are recorded at wavelengths positioned in between the recording wavelengths of said second wavelength multiplexed holograms.

In an alternative embodiment, said holograms are shift multiplexed holograms. However, in that case spherical waves are required, as above mentioned.

These and other aspects of the invention will be apparent from and elucidated with reference to the embodiments described hereinafter.

### BRIEF DESCRIPTION OF THE DRAWINGS

The invention will now be described in more detail by way of example with reference to the accompanying drawings, in which :
- Figure 1a shows a holographic data storage system after recording data through one side of the holographic recording medium;
- Figure 1b shows the holographic recording medium after rotation;
- Figure 1c shows the holographic data storage system after recording data trough the two sides of the holographic recording medium;
- Figure 2 shows the embodiment of the holographic data storage system during reading-out;
- Figure 3 shows a holographic data storage system designed for shift multiplexing.

### DETAILED DESCRIPTION OF THE INVENTION

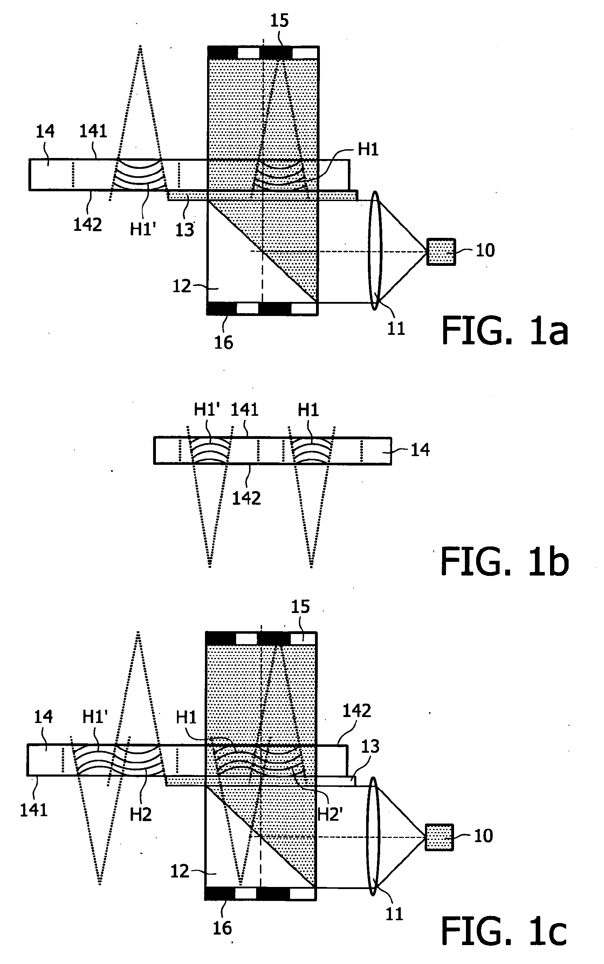

The optical device depicted in Figure 1a is a holographic data storage system intended to record data in and read data from a holographic recording medium 14.

This optical device further comprises a radiation source 10, a collimator 11, a polarizing beam splitter 12, a quarter wave plate 13, a reflective spatial light modulator 15 and detecting means 16. The optical device also comprises means for receiving the recording medium, which are not shown in Figures 1a and 1c. These receiving means are, for example, a table such as those conventionally used in CD or DVD players.

During recording, which is represented in Figure 1a, the radiation source 10 generates a radiation beam, which is transformed into a parallel beam by means of the collimator 11. This parallel beam is then directed towards the recording medium 14 by means of the polarizing beam splitter 12. After the parallel beam has passed through the polarizing beam splitter 12, it has a linear polarization. This linearly polarized beam then passes through the quarter wave plate 13, which creates a circularly polarized beam. This latter beam passes through the recording medium 14 and reaches the reflective spatial light modulator 15. The signal thus reflected is circularly polarized and carries the information sent to the reflective spatial light modulator 15. This reflected signal then reaches the recording medium 14 through a first side 141 and an interference takes place with the circularly polarized beam that has just passed through the quarter wave plate 13. This interference creates an information pattern in the recording medium 14, and a first hologram H1 is thus recorded. Interference can take place between the beam coming from the reflective spatial light modulator 15 and the beam that has just passed through the quarter wave plate 13, because these two beams have the same polarization. The beam that has just passed through the quarter wave plate 13 plays the role of a reference beam, whereas the beam coming from the reflective spatial light modulator 15 plays the role of a signal beam.

The reflective spatial light modulator 15 may be, for example, a reflective ferroelectric Liquid Crystal on Silicon (FLCOS) spatial light modulator. Such a spatial light modulator is commercialized, inter alia, by the companies "Boulder Nonlinear Systems" and "Displaytech". The reflective spatial light modulator 15 may also be a reflective Digital Micromirror Device (DMD) spatial light modulator. Such a spatial light modulator is commercialized, inter alia, by the company "Productivity Systems". The reflective spatial light modulator 15 may also be a combination of a transmissive spatial light modulator and a mirror, although this solution is less preferred, because the efficiency of a transmissive spatial light modulator is lower than the efficiency of a reflective spatial light modulator.

In order to increase the storage capacity of the recording medium 14, wavelength multiplexing can be carried out consisting in recording at least another hologram at the same location by modifying the wavelength of the radiation beam. The optical device in accordance with figures 1a and 1c is particularly suitable for wavelength multiplexing. Actually, in order to record a relatively high number of holograms at a same location of the recording medium 14, the wavelength selectivity should be as low as possible. The wavelength selectivity represents the gap between two successive wavelengths that can be used for recording two holograms with acceptable crosstalk. Details about wavelength multiplexing can be found in H.J. Coufal, D. Psaltis, G.T. Sincerbox (Eds.), 'Holographic data storage', Springer series in optical sciences, (2000).

Once a first hologram H1 has been recorded in the recording medium 14, another first hologram H1' may be recorded by moving the recording medium 14 with respect to the optical pick-up unit comprising the detecting means 16, the polarizing beam splitter 12, the quarter wave plate 13 and the reflective spatial light modulator 15. Alternatively, the optical pick-up unit is moved with respect to the recording medium 14, in a direction parallel to the recording medium 14.

After recording of the first holograms H1 and H1', the holographic recording medium 14 is rotated as shown on Figure 1b and placed again in the optical device for recording two second holograms H2 and H2' represented on Figure 1c. The way the second holograms are recorded in the recording medium 14 is the same as that used for recording the first holograms H1 and H1', except that in Figure 1c recording is effected through a second side 142 of the recording medium 14.

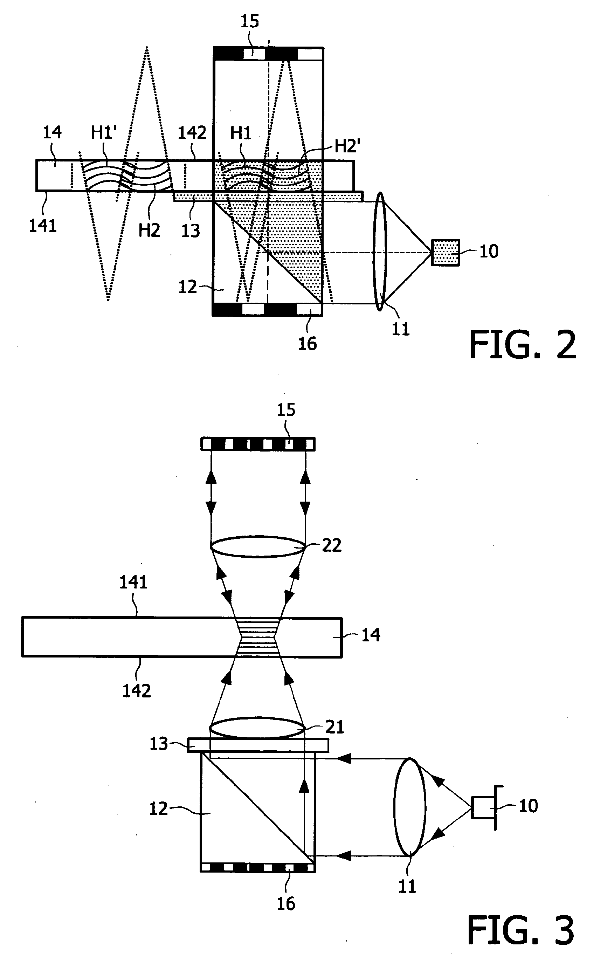

During read-out, which is represented in Figure 2, the radiation source 10 generates a radiation beam having a given wavelength, which is transformed into a parallel beam by means of the collimator 11. This parallel beam is then directed towards the recording medium 14 by means of the polarizing beam splitter 12. After the parallel beam has passed through the polarizing beam splitter 12, it has a linear polarization. This linearly polarized beam then passes through the quarter wave plate 13, which creates a circularly polarized beam. This latter beam reaches the recording medium 14, and is reflected by the information patterns recorded in said recording medium 14 as first hologram H1 and second hologram H2'. A first reconstructed signal beam is thus created which carries the information corresponding to the first hologram H1 recorded with the same wavelength. This reconstructed signal beam passes through the quarter wave plate 13, which creates a beam with a linear polarization perpendicular to the polarization of the beam that has just been deflected by the polarizing beam splitter 12. As a consequence, this linearly polarized reconstructed signal beam passes through the polarizing beam splitter 12 and thus forms a real image on the detecting means 16. The recorded first hologram H1 is thus read-out.

It should be noted that the second hologram H2' also gives rise to an image which is a virtual image formed together with the real image obtained from the first hologram H1. Whereas in the real holographic image every pixel of the spatial light modulator 15 is imaged on a pixel of the detecting means 16, every pixel of the virtual image is smeared out over a large number of pixels on said detecting means 16, resulting in a DC offset. Thus, the capacity increase of a factor 2 is obtained at the expense of the signal-to-noise ratio.

This cross-talk between the real and the virtual images can be decreased by recording the holograms through one side at wavelengths which are positioned in between the wavelengths of the holograms recorded through the other side of the recording medium 14, e.g. at ...400 nm, 402 nm, 404 nm,... through one side and at ..., 401 nm, 403 nm, 405 nm,... through the other side.

Naturally, for reading-out said second holograms H2, H2' the recording medium 14 has to be rotated so as to convert the corresponding virtual images into real images formed on the detecting means 16.

The storage capacity of the recording medium 14 can also be increased by using shift multiplexing. Figure 3 shows an optical device for that purpose.

This optical device comprises, in addition to elements already depicted with reference to Figures 1a and 1c, a first lens 21 and a second lens 22. The first lens 21 is arranged between the polarizing beam splitter 12 and the recording medium 14, and the second lens 22 is arranged between the recording medium 14 and the reflective spatial light modulator 15.

During recording, the radiation beam that has passed through the quarter wave plate 13 is focused in the recording medium 14 by means of the first lens 21. A spherical wave beam is thus focused in the recording medium 14. This spherical wave beam is then made parallel by means of the second lens 22, and then reaches the reflective spatial light modulator 15 where a signal beam is created. On the way back from the spatial light modulator 15, the signal beam is focused on the recording medium 14 by means of the second lens 22. As a consequence, a spherical wave signal beam interferes with a spherical wave reference beam inside the recording medium 14, and an information pattern is created, which corresponds to a first hologram to be recorded.

The fact that spherical wave beams interfere inside the recording medium 14 allows for shift multiplexing. Shift multiplexing consists in recording a second set of holograms by shifting the recording medium with respect to the optical pick-up unit. Once a first hologram has been recorded at a given location of the recording medium, the recording medium is moved over a distance that is less that the width of a hologram, and then another first hologram may be recorded. Shift multiplexing is only possible when spherical waves interfere.

After the holographic recording medium is rotated, a set of second holograms can be recorded the same way as said first holograms.

Advantageously, a combination of shift multiplexing and wavelength multiplexing may be used for recording data in the recording medium 14.

During read-out, a spherical wave beam is sent towards the recording medium 14 and is reflected by the information pattern. As explained in Figure 1c, a reconstructed signal beam is created, which then reaches the detecting means 16. Read-out of a hologram that has been recorded with a given wavelength and a given position of the recording medium 14 with respect to the optical pick-up unit is performed by placing the recording medium 14 at the same position and generating a radiation beam having the same wavelength. It should be noted that the medium 14 needs not to be rotated after recording before it can be read out. A real image is obtained without rotating the medium 14 because the virtual image is converted into a real image by the first lens 21.

Any reference sign in the following claims should not be construed as limiting the claim. It will be obvious that the use of the verb "to comprise" and its conjugations does not exclude the presence of any other elements besides those defined in any claim. The word "a" or "an" preceding an element does not exclude the presence of a plurality of such elements.

## Claims

1. A method for recording data in a holographic information carrier comprising a holographic recording medium (14), in a holographic data storage system, comprising the steps of:
- recording a first hologram (H1, H1') through a first side (141) of said holographic recording medium,
- turning said holographic information carrier (14) upside down,
- recording a second hologram (H2, H2') through a second side (142) of same holographic recording medium.

2. A method as claimed in claim 1, wherein said holograms are wavelength multiplexed holograms.

3. A method as claimed in claim 2, wherein said first wavelength multiplexed holograms are recorded at wavelengths positioned in between the recording wavelengths of said second wavelength multiplexed holograms.

4. A method as claimed in claim 1, wherein said holograms are shift multiplexed holograms.

5. A method for reading-out data recorded in a holographic information carrier comprising a holographic recording medium (14) according to a method as claimed in claim 1, comprising the steps of:
- reading-out a first hologram (H1, H1') recorded through one side (141) of said holographic recording medium,
- turning said holographic information carrier (14) upside down,
- reading-out a second hologram (H2, H2') recorded on the other side (142) of same holographic recording medium.

6. A holographic data storage system comprising a holographic information carrier comprising a holographic recording medium (14) wherein first (H1, H1') and second (H2, H2') holograms are recorded respectively through a first (141) and second (142) side of said holographic recording medium, said holographic data storage system comprising wavelength multiplexing means for filtering virtual images formed when reading-out said holograms.

7. A holographic data storage system as claimed in claim 8, wherein wavelength multiplexing means are means for recording first wavelength multiplexed holograms at wavelengths positioned in between the recording wavelengths of second wavelength multiplexed holograms.

8. A holographic information carrier comprising a holographic recording medium (14) wherein first (H1, H1') and second (H2, H2') holograms are recorded respectively through a first (141) and second (142) side of said holographic recording medium.

## Patentansprüche

1. Verfahren zur Aufzeichnung von Daten in einem holographischen Informationsträger mit einem holographischen Aufzeichnungsmedium (14), in einem holographischen Datenspeichersystem, wobei dieses Verfahren die nachfolgenden Verfahrensschritte umfasst:
- das Aufzeichnen eines ersten Hologramms (H1, H1') durch eine erste Seite (141) des genannten holographischen Aufzeichnungsmediums,
- das Umkehren des holographischen Informationsträgers (14),
- das Aufzeichnen eines zweiten Hologramms (H2, H2') durch eine zweite Seite (142) desselben holographischen Mediums.

2. Verfahren nach Anspruch 1, wobei die genannten Hologramme Wellenlänge-gemultiplexte Hologramme sind.

3. Verfahren nach Anspruch 2, wobei die genannten ersten Wellenlänge-gemultiplexten Hologramme mit Wellenlängen aufgezeichnet werden, die zwischen den Aufzeichnungswellenlängen der genannten zweiten Wellenlänge-gemultiplexten Hologramme liegen.

4. Verfahren nach Anspruch 1, wobei die genannten Hologramme Verschiebungs-gemultiplexte Hologramme sind.

5. Verfahren zum Auslesen in einem holographischen Informationsträger aufgezeichneter Daten mit einem holographischen Aufzeichnungsmedium (14) nach einem Verfahren nach Anspruch 1, wobei dieses Verfahren die nachfolgenden Verfahrensschritte umfasst;
- das Auslesen eines ersten Hologramms (H1, H1'), das durch eine Seite (141) des genannten holographischen Aufzeichnungsmediums aufgezeichnet worden ist,
- das Umdrehen des genannten holographischen Informationsträger (14),
- das Auslesen eines zweiten Hologramms (H2, H2'), das auf der anderen Seite (142) desselben holographischen Aufzeichnungsmediums aufgezeichnet worden ist.

6. Holographisches Datenspeichersystem mit einem holographischen Informationsträger mit einem holographischen Aufzeichnungsmedium (14), wobei erste Hologramme (H1, H1') und zweite Hologramme (H2, H2') durch eine erste Seite (141) bzw. eine zweite Seite (142) des genannten holographischen Aufzeichnungsmediums aufgezeichnet werden, wobei das genannte holographische Datenspeichersystem zum Filtern virtueller Bilder beim Auslesen der genannten Hologramme Wellenlänge-Multiplexmittel aufweist.

7. Holographisches Datenspeichersystem nach Anspruch 6, wobei Wellenlänge-Multiplexmittel Mittel sind zum Aufzeichnen erster Wellenlänge-gemultiplexter Hologramme mit Wellenlängen, die zwischen den Aufzeichnungswellenlängen zweiter Wellenlänge-gemultiplexter Hologramme liegen.

8. Holographischer Informationsträger mit einem holographischen Aufzeichnungsmedium (14), wobei erste Hologramme (H1, H1') und zweite Hologramme (H2, H2') durch eine erste Seite (141) bzw. eine zweite Seite (142) des genannten holographischen Aufzeichnungsmediums aufgezeichnet werden.

## Revendications

1. Procédé d'enregistrement de données dans un support holographique d'informations comprenant un support holographique d'enregistrement (14), dans un système holographique de stockage de données, comprenant les étapes suivantes consistant à :
- enregistrer un premier hologramme (H1, H1') par le biais d'un premier côté (141) dudit support holographique d'enregistrement,
- tourner ledit support holographique d'informations (14) sens dessus dessous,
- enregistrer un deuxième hologramme (H2, H2') par le biais d'un deuxième côté (142) du même support holographique d'enregistrement.

2. Procédé selon la revendication 1, dans lequel lesdits hologrammes sont des hologrammes multiplexés en longueur d'onde.

3. Procédé selon la revendication 2, dans lequel lesdits premiers hologrammes multiplexés en longueur d'onde sont enregistrés à des longueurs d'onde qui se situent entre les longueurs d'onde d'enregistrement desdits deuxièmes hologrammes multiplexés en longueur d'onde.

4. Procédé selon la revendication 1, dans lequel lesdits hologrammes sont des hologrammes multiplexés par décalage.

5. Procédé de lecture de données qui sont enregistrées dans un support holographique d'informations comprenant un support holographique d'enregistrement (14) selon un procédé, tel que revendiqué dans la revendication 1, comprenant les étapes suivantes consistant à :
- lire un premier hologramme (H1, H1') qui est enregistré par le biais d'un côté (141) dudit support holographique d'enregistrement,
- tourner ledit support holographique d'informations (14) sens dessus dessous,
- lire un deuxième hologramme (H, H2') qui est enregistré de l'autre côté (142) du même support holographique d'enregistrement.

6. Système holographique de stockage de données comprenant un support holographique d'informations comprenant un support holographique d'enregistrement (14) dans lequel les premiers (H1, H1') et les deuxièmes (H2, H2') hologrammes sont enregistrés, respectivement, par le biais d'un premier (141) et d'un deuxième (142) côté dudit support holographique d'enregistrement, ledit système holographique de stockage de données comprenant des moyens de multiplexage de longueur d'onde afin de filtrer des images virtuelles qui sont formées au cours de la lecture desdits hologrammes.

7. Système holographique de stockage de données selon la revendication 8, dans lequel des moyens de multiplexage de longueur d'onde sont des moyens pour enregistrer des premiers hologrammes multiplexés en longueur d'onde à des longueurs d'onde qui se situent entre les longueurs d'onde d'enregistrement desdits deuxièmes hologrammes multiplexés en longueur d'onde.

8. Support holographique d'informations comprenant un support holographique d'enregistrement (14) dans lequel les premiers (H1, H1') et les deuxièmes (H2, H2') hologrammes sont enregistrés, respectivement, par le biais d'un premier (141) et d'un deuxième (142) côté dudit support holographique d'enregistrement.
